# EUROPEAN PATENT SPECIFICATION

(11) **EP 2 883 433 B1**
(45) Date of publication and mention of the grant of the patent: **07.03.2018**
(21) Application number: 13828599.4
(22) Date of filing: 29.07.2013
(51) Int. Cl.: A01B 33/10

(54) **TILLAGE TINE**
ZINKE FÜR ACKERFRÄSE
DENT DE CULTIVATEUR

(30) Priority: 10.08.2012 JP 2012178831; 12.04.2013 JP 2013084053
(43) Date of publication of application: 17.06.2015
(73) Proprietor: Taiyo Co., Ltd., Kochi 781-5101 (JP)
(72) Inventor: MATSUMOTO Shungo, Kochi-shi Kochi 781-5101 (JP); YAMASAKI Yasuyuki, Kochi-shi Kochi 781-5101 (JP); KIRAGAWA Tetsurou, Kochi-shi Kochi 781-5101 (JP); DOI Teruaki, Kochi-shi Kochi 781-5101 (JP); SANNOMIYA Toyoaki, Kochi-shi Kochi 781-5101 (JP)
(74) Representative: Addiss, John William
(86) International application number: PCT/JP2013/070418
(87) International publication number: WO 2014/024707

(56) References cited:
- JP-A- 2006 101 815
- JP-A- 2006 101 815
- JP-A- 2012 080 901
- JP-A- 2012 080 901

## Description

### Technical Field

The present invention relates to a tillage tine that plows soil.

### Background Art

As the shape of a conventional tillage tine, for example, Japanese Utility Model Publication No. 31-5608 discloses the one in which a distal end of a mounting base portion formed from a flat plate extending in a shaft diameter direction and having a mounting hole is bent at the substantially right angle with respect to a plane perpendicular to a rotary shaft, and a cutting edge is formed at a lower end portion (rotational direction) of the distal end.

### Summary of Invention

### Technical Problem

However, in the above described tillage tine, abrupt stress concentration acts at the time of being hammered into soil, and a large load fluctuation is involved. Therefore, there arise problems in strength, such as bending and breakage of the tillage tine. Further, since at the time of the tillage tine being hammered into soil, a clod that is being cut is hit by the cutting edge, reliable cutting operation is difficult to perform, and a problem of nonuniformity of clods arises. Moreover, since straws, grass and the like are not cut but are caught by the cutting edge, entanglement is caused, and there are problems of increase in tilling vibration and horsepower consumption, and a problem in plowing-in performance.

Thus, the present invention solves the problems as above, and has an object to provide a tillage tine that suppresses stress concentration and a load fluctuation thereby at the time of being hammered into soil, reduces tilling vibration and horsepower consumption, and is excellent in various kinds of tilling performance such as a throwing force, reversibility, plowing-in performance, soil crushing performance, and land leveling performance.

### Solution to Problem

In order to solve the aforementioned problems, a tillage tine according to claim 1 of the present invention includes a mounting base portion that is fitted to a mounting flange of a rotary tine shaft, a vertical blade portion that is formed from a planar plate that extends continuously in a lateral direction from the mounting base portion in side view to a lateral blade curve start portion when a surface having a rotation axis of the rotary tine shaft as a normal line is set as a side surface, and includes a cutting edge that is formed at a lower side via a step from a lower edge of the mounting base portion, and a lateral blade portion that extends continuously from the vertical blade portion with the lateral blade curve start portion as a boundary, is formed by including a width dimension not less than a width dimension of the mounting base portion, from the vertical blade portion to a distal end side, is formed by gradually curving to an upper side in side view, and is formed from a curved plate that is curved to one side with the lateral blade curve start portion as the boundary.

Further, a tillage tine according to claim 2 of the present invention is the tillage tine according to claim 1, wherein the lateral blade portion is curved at a substantially right angle in sectional view orthogonal to the lateral blade curve start portion.

Further, a tillage tine according to claim 3 of the present invention is the tillage tine according to claim 2, wherein the lateral blade curve start portion comprises a circular arc with a bending radius with a bending center that is provided at an upper side or a lower side from a substantially central portion position of a mounting base portion width in the mounting base portion as a center.

Further, a tillage tine according to claim 4 of the present invention is the tillage tine according to any one of claims 1 to 3, wherein a wall thickness of a distal end in the lateral blade portion is formed to be substantially equivalent to, or thinner than a wall thickness of the mounting base portion.

The tillage tine of the present invention suppresses stress concentration at the time of being hammered into soil and a load fluctuation due to this, and can decrease tilling vibration and horsepower consumption. Further, the tillage tine is excellent in various kinds of tilling performance such as a throwing force, reversibility, plowing-in performance, soil crushing performance and land leveling performance.

### Brief Description of Drawings

[Figure 1] Figure 1 is a side view of a tillage tine in an embodiment of the present invention.
[Figure 2] Figure 2 is a sectional view with omission of T-T-part of Fig. 1 of the tillage tine in the embodiment of the present invention.
[Figure 3] Figure 3 is a side view of a tillage tine in another embodiment of the present invention.
[Figure 4] Figure 4 is a side view of a tillage tine in still another embodiment of the present invention.

### Description of Embodiments

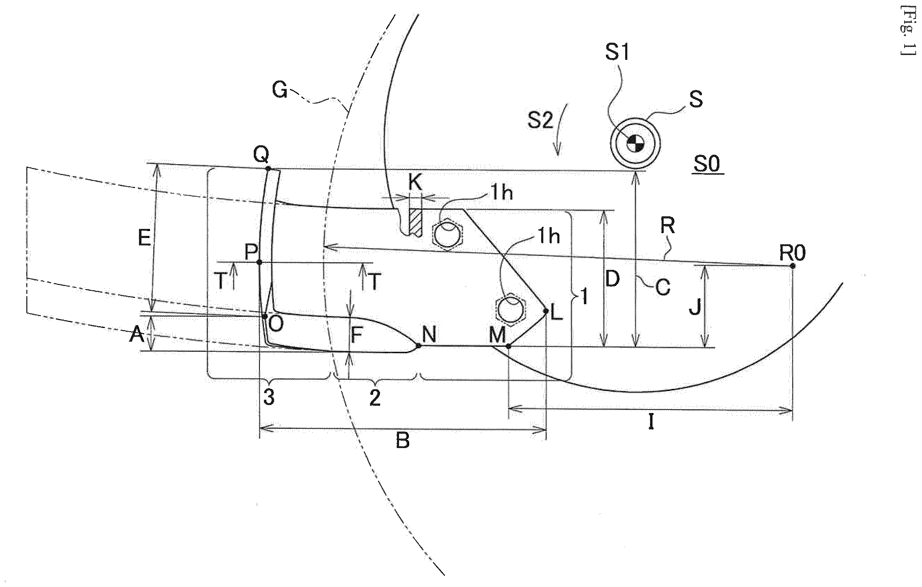

Hereinafter, a tillage tine in an embodiment of the present invention will be described based on the drawings. In the tillage tine, a surface directly confronting a rotation trajectory of a rotary tine shaft S, namely, a surface having a rotation axis of the rotary tine shaft S as a normal line is set as a side surface. In the side surface, when a mounting base portion extends in a shaft diameter direction of the rotary tine shaft S, a surface directly confronting an extending direction in which a vertical blade portion extends in a lateral direction from the mounting base portion is set as a front surface direction. In front view (not illustrated) observed from the front surface direction, the tillage tine curves in a right direction. Further, as shown in Figure 1, the tillage tine curves in a front direction (a front direction of the paper surface) as one faces it in side view.

### Embodiments

The tillage tine according to the present invention is fitted to a mounting flange S0 with the rotary tine shaft S of a rotary main body in a tiller as an axis, as shown in Figure 1. In the tillage tine, a mounting base portion 1, a vertical blade portion 2 extending continuously in a lateral direction from the mounting base portion 1, and a lateral blade portion 3 that extends continuously from the vertical blade portion 2 with a lateral blade curve start portion G as a boundary are configured integrally.

As shown in Figure 1, in side view, the tillage tine is formed from a planar plate that curves to be gradually away from a rotational direction S2 of a rotation center S1 in the rotary tine shaft S from the mounting base portion 1 to the lateral blade portion 3. Namely, the planar plate is formed by being curved gradually toward an upper side from the mounting base portion 1 to the lateral blade portion 3. More specifically, the planar plate is formed by including a width dimension that is not less than a width dimension of the mounting base portion 1 from the vertical blade portion 2 to a distal end side of the lateral blade portion 3, and is also formed by being gradually curved toward the upper side. The tillage tine is configured by the planar plate being curved by a curving curvature radius r at the lateral blade curve start portion G. Thereby, the mounting base portion 1 and the vertical blade portion 2 are formed from a planar plate, and the lateral blade portion 3 is formed from a curved plate.

The mounting base portion 1 refers to a region from a lateral direction rear end position L to a cutting edge start end N in the mounting base portion. The cutting edge start end N is located on a lower edge that is located at a lower side from the lateral direction rear end position L of the mounting base portion, and at a distal end side in the lateral direction (a left direction in Figure 1), along the lower edge from the lower edge rear end position M of the mounting base portion.

The mounting base portion 1 is fitted by being mounted to the mounting flange S0. The mounting base portion 1 is provided with a mounting hole 1h for being mounted to the mounting flange S0. At least one or a plurality of mounting holes 1h is or are desired to be provided.

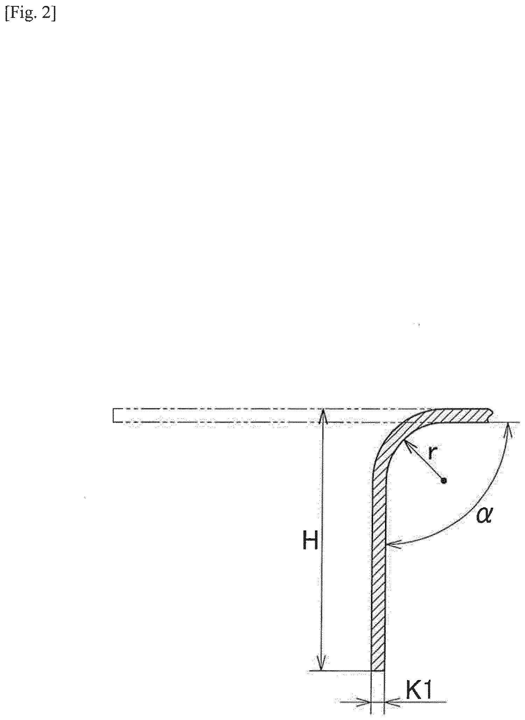

Further, of both side surfaces of the mounting base portion 1, a side surface at an opposite side from the curving direction is set as a reference surface (see Figure 2). As shown in Figure 2, the reference surface is a reference for a curving height H of the lateral blade portion 3 being curved by the curving curvature radius r.

The vertical blade portion 2 extends continuously in the lateral direction from the mounting base portion 1, and refers to a region from the cutting edge start end N to the lateral blade curve start portion G. A wall thickness of the vertical blade portion 2 may be the same thickness from the mounting base portion 1 to the lateral blade curve start portion G, or may be set to be sequentially thinner. Further, the vertical blade portion 2 has a blade continuing to the lower edge. A lowermost edge of the vertical blade portion 2 is formed by providing a step at a lower side from the lower edge of the mounting base portion 1 where the lower edge rear end position M and the cutting edge start end N are located.

The lateral blade portion 3 refers to an entire region from the lateral blade curve start portion G to a distal end, and is formed from a curved plate that is curved continuously to one side with respect to the reference surface. The curved plate is in a curved shape that bends upward to the distal end in side view. Namely, the lateral blade portion 3 connects to the vertical blade portion 2 with the lateral blade curve start portion G as a boundary, and mainly extends in the lateral direction and also curves upward in side view.

Further, the lateral blade portion 3 is formed to have a width that is substantially equivalent to a mounting base portion width D or larger than the mounting base portion width D toward the distal end. For example, the lateral blade portion 3 may be formed so that a lateral blade portion distal end width E that will be described later has a substantially equivalent width dimension to the width dimension of the vertical blade portion 2 including a blade width F of the vertical blade portion 2, or may be formed to be wide from the width dimension of the vertical blade portion 2 including the blade width F of the vertical blade portion 2 to the lateral blade portion distal end width E. The width dimension of the vertical blade portion 2 including the blade width F of the vertical blade portion 2 intends to also include the blade width of the nearby vertical blade portion 2 in the cutting edge start end N. The blade width F excluding the blade width of the nearby vertical blade portion 2 in the cutting edge start end N that will be described later indicates a maximum blade width. When the width dimension of the vertical blade portion 2 including the blade width F of the vertical blade portion 2 and the lateral blade portion distal end width E are formed to be substantially equivalent to each other, the lateral blade portion 3 may be formed with a constant maximum blade width from the vertical blade portion 2 to the lateral blade portion 3. A wall thickness of the lateral blade portion 3 may be the same thickness from the lateral blade curve start portion G to the distal end, or may be set so that the thickness becomes thinner in sequence.

### (Entire shape in side view and ratio of tillage clearance length A)

In regard with an entire shape of the tillage tine in side view, as shown in Figure 1, when a vertical distance from the lowermost edge of the vertical blade portion 2 to a lateral direction distal end position O of a lateral blade portion cutting edge is set as a tillage clearance length A, a horizontal distance from a lateral direction rear end position L of the mounting base portion to a lateral direction distal end position P of the lateral blade portion is set as an entire lateral length B, and a vertical distance from the lower edge of the mounting base portion 1 to a top portion Q of the lateral blade portion is set as an entire vertical length C, a ratio of the tillage clearance length A, the entire lateral length B, and the entire vertical length C is preferably about 1 : 5 to 30 : 3 to 13. Further, a ratio of the tillage clearance length A and the mounting base portion width D is preferably about 1 : 2 to 12, and more preferably about 1 : 4 to 10.

### (Entire shape in side view and ratio of lateral blade portion distal end width E)

Further, as shown in Figure 1, when a distance from the lateral direction distal end position O of the lateral blade portion cutting edge to the top portion Q of the lateral blade portion is set as a lateral blade portion distal end width E, a ratio of the mounting base portion width D, the lateral blade portion distal end width E, and an entire vertical length C is preferably about 1 : 1 to 2 : 1 to 2.

Namely, the lateral blade portion distal end width E is substantially equivalent to the mounting base portion width D or slightly larger than the mounting base portion width D. Thereby, a curving shape of the cutting edge is not formed by cutting the planar plate before curved from the mounting base portion 1 to the lateral blade portion 3 so that the lateral blade portion distal end width E becomes narrow in the cutting edge side, but the cutting edge can be curved upward in side view. Further, the width dimension from the lateral blade curve start portion G to the distal end of the lateral blade portion 3 where abrasion at the time of tillage is very hard is formed to be large, and therefore, life of the tillage tine can be extended. Furthermore, since the throwing force at the time of tillage is increased, reversibility, plowing-in performance, soil crushing performance and land leveling performance can be improved.

### (Cutting edge shape in side view)

A cutting edge shape in side view from the cutting edge start end N of the vertical blade portion 2 to the lateral direction distal end position O of the lateral blade portion cutting edge is constituted of a curved line of a noncircular arc as a whole, which is continuously changed in curvature. Note that the curved line may be the one with a plurality of circular arc curved lines connected as long as the curved line is a noncircular arc as a whole. Further, except for the blade width of the nearby vertical blade portion 2 in the cutting edge start end N, the ratio of the blade width F and the mounting base portion width D is preferably about 1 : 3 to 10. Namely, the blade width F mentioned in the ratio to the mounting base portion width D indicates the maximum blade width.

In the present tillage tine, a single-edged tine with a blade formed on only one side surface in the curving direction is adopted as shown in Figure 1, but other than this, a double-edged tine with blades formed on both side surfaces, and a single-edged tine with a blade formed on only one side surface in an opposite direction from the curving direction may be adopted.

### (Curve)

As shown in Figure 2, the lateral blade portion 3 is curved by a curving curvature radius r with respect to the reference surface, via the lateral blade curve start portion G. Further, a curving angle α is set as a substantially right angle. Furthermore, a ratio of the curving height H of the lateral blade portion 3 from the reference surface and the entire lateral length B is preferably about 1 : 1.1 to 2.

The lateral blade curve start portion G is constituted of a circular arc of a bending radius R with a bending center R0 located at a side of the mounting base portion 1 as a center. When a horizontal distance from a lower edge rear end position M of the mounting base portion to the bending center R0 is set as I in side view, a ratio of the entire lateral length B, the horizontal distance I, and the bending radius R is preferably about 1 : 0.07 to 3 : 0.5 to 3.5, and more preferably about 1 : 0.09 to 1 : 0.7 to 1.5.

Further, when a vertical distance from the lower edge of the mounting base portion 1 to the bending center R0 is set as J, a ratio of the vertical distance J and the mounting base portion width D is preferably about 1 : 1.6 to 1.8. Namely, a position of the bending center R0 is provided at an upper side from a substantially central portion position of the mounting base portion width D. As above, the lateral blade portion 3 that is curved at the lateral blade curve start portion G constituted of a circular arc with the bending radius R is curved at a substantially right angle in sectional view orthogonal to the lateral blade curve start portion G.

Since the position of the bending center R0 is provided at the upper side from the substantially central portion position of the mounting base portion width D as above, the curving amount at the cutting edge side can be made large in the vicinity of the lateral blade curve start portion G in side view of Figure 1, and a curving amount in the vicinity of the top portion Q of the lateral blade portion in side view can be made large. Thereby, at an early stage of tillage when the tine is hammered into soil, a load fluctuation in the vicinity of the lateral blade curve start portion G can be suppressed. At the terminal stage of tillage when the tine is hammered into soil, a throwing force is optimized, and reversibility, plowing-in performance, soil crushing performance and land leveling performance can be improved.

### (Wall thickness)

A wall thickness of the tillage tine is set so that the thickness becomes sequentially thinner from the mounting base portion 1 to the lateral blade portion 3. More specifically, the thickness is set to be sequentially thinner from the mounting base portion 1 to the distal end of the lateral blade portion 3. When a wall thickness of the mounting base portion 1 is set as a mounting base portion thickness K, and a wall thickness of the distal end in the lateral blade portion 3 is set as a lateral blade portion distal end thickness K1 in side view of Figure 1, a ratio of the mounting base portion thickness K and the lateral blade portion distal end thickness K1 is preferably 1 : 0.6 to 1. When abrasion resistance in the distal end of the lateral blade portion 3 is taken into consideration, the ratio is preferably set at 1 : 0.8 to 1.

Thereby, stress to the mounting base portion 1 can be relieved, and therefore, strength to breakage and bending of the tillage tine can be improved. Further, since proper spring characteristics are added to as far as the distal end of the lateral blade portion 3, tilling vibration is reduced, and breakage of the mounting bolt and the mounting flange S0, the rotary tine shaft S, and the rotary main body is prevented as a result. Moreover, the spring characteristics add a proper reaction force to soil to be cultivated, and therefore reversibility, plowing-in performance and soil crushing performance are improved as a result.

According to the tillage tine according to the present invention described above, the mounting base portion 1 to the lateral blade portion 3 are formed by curving the planar plate, which is formed to be gradually curved toward the upper side, by the curving curvature radius r at the lateral blade curve start portion G, and therefore, the cutting edge is formed to have gradual inclination toward the upper side, in side view. Thereby, in the tillage time, a contact position of the cutting edge in the tillage tine to soil can be gradually shifted to the distal end side. As a result, stress concentration at the time of hammering into soil and a load fluctuation due to this are suppressed, and tilling vibration and horsepower consumption can be reduced.

Further, since the contact position of the cutting edge in the tillage tine to soil is gradually shifted to the distal end side in the tillage time, the clods that are being cut are difficult to hit by the cutting edge, and therefore, uniformity of clods and land preparation performance are improved.

Moreover, since the contact position of the cutting edge in the tillage tine to soil is gradually shifted to the distal end side at the tillage time, even if straws, grass and the like contact the cutting edge, the straws, grass and the like can be smoothly discharged to the distal end side, and can be cut. As a result, entanglement hardly occurs to the cutting edge, and therefore, the tillage tine with excellent plowing-in performance is provided.

Further, the lateral blade curve start portion G is constituted of the circular arc with the bending radius R having the bending center R0 that is provided at the upper side from the substantially central portion position of the mounting base portion width D in the mounting base portion 1 as the center. The lateral blade portion distal end width E of the distal end in the lateral blade portion 3 is formed to be larger than the mounting base portion width D, and the lateral blade portion distal end thickness K1 in the lateral blade portion 3 is formed to be equivalent to or thinner than the wall thickness of the mounting base portion thickness K in the mounting base portion 1. Thereby, by the effect in the respective structures, and a combined effect thereof, the tillage tine that is excellent in tilling performance such as a throwing force, reversibility, plowing-in performance, soil crushing performance and land leveling performance is provided.

The invention is not limited to the configuration of the aforementioned embodiment, and can be carried out by properly changing the shape, size, quality and the like. For example, the vertical blade curve start portion G is not limited to the circular arc with the bending radius R with the bending center R0 as the center, but can be made a vertical straight line having the same dimension from the bending center R0. Further, the curve of the lateral blade portion 3 is not limited to a substantially right angle, but can be properly changed within a range of an obtuse angle. For example, the lateral blade portion 3 may be curved with the curving curvature radius r set as 95 degrees that is in the range of a substantially right angle. Thereby, abrasion of the curved spot that is curved by the curving curvature radius r can be prevented from extremely advancing. As a result, the curved sport can be prevented from breaking. At this time, the ratio of the curving curvature radius r and the bending radius R is preferably about 1 : 2 to 7, and more preferably about 1 : 3 to 4.

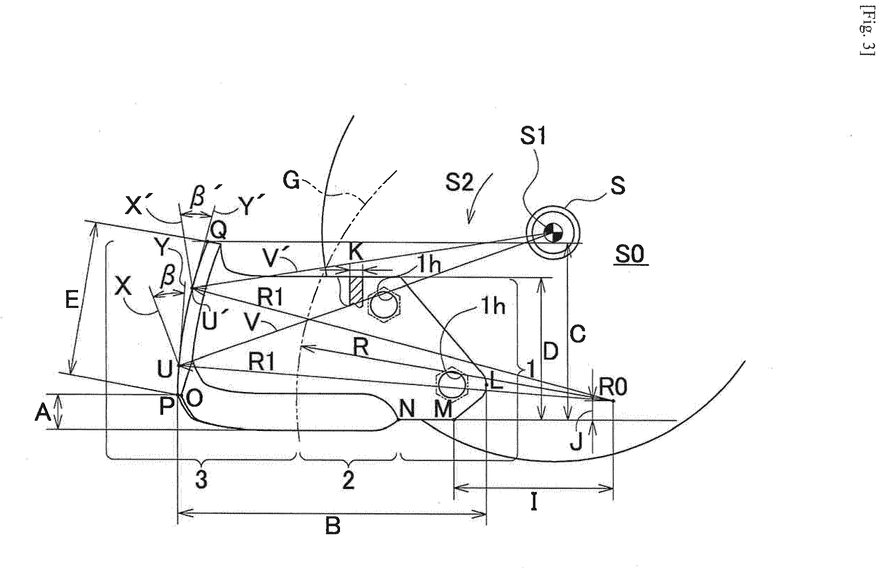

Moreover, the position of the bending center R0 can be provided at a lower side from the substantially central portion position of the mounting base portion width D. More specifically, as shown in Figure 3, arbitrary points on an circular arc with a bending radius R1 that pass through a lateral direction distal end position P of the lateral blade portion from the bending center R0 are set as points U and U', lines that connect the points U and U', and the rotation center S 1 in the rotary tine shaft S are set as V and V', respective vertical lines at an upper side (an opposite direction from the rotation direction S2) in the lines V and V' are set as lines X and X' in side view. When tangential lines of the bending radius R1 that pass through the points U and U' are set as Y and Y', and angles formed by the lines X and X' and lines Y and Y' are set as cutting angles β and β', the bending center R0 is set at a lower side from the substantially central portion position of the mounting base portion width D so that the cutting angle β and the cutting angle β' are substantially equivalent to each other. More specifically, the cutting angles β and β' are each set at 21 degrees or more.

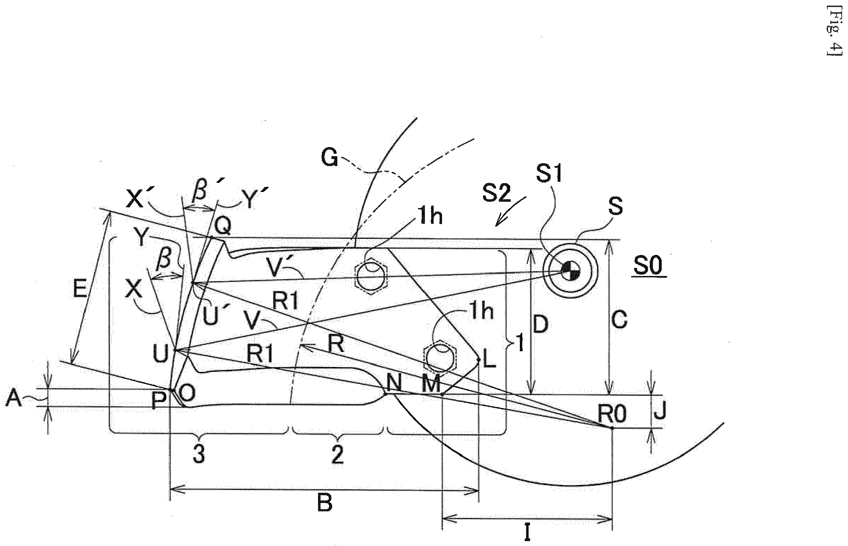

Here, since the cutting angles β and β' are affected by the position of the rotation center S 1 in the rotary tine shaft S in the angle dimensions thereof, numeric values thereof vary in accordance with the mounting position of the tillage tine in the mounting holes 1h. Therefore, it goes without saying that in the tillage tine according to the present invention, the shape of the tillage tine can be properly changed within the scope of the embodiment so that the cutting angles β and β' become 21 degrees or more, whatever position the mounting position of the tillage tine may be. The purport of the present invention is such that at this time, the position of the bending center R0 can be at the lower side from the substantially central portion position of the mounting base portion width D, and in a relation with the position of the rotation center S1 and the cutting angles β and β', the position of the bending center R0 may be located at a lower side from the lower edge of the mounting base portion 1 as shown in Figure 4, as a matter of course.

Coupled with the shape of the planar plate formed by being gradually curved toward the upper side, from the mounting base portion 1 to the lateral blade portion 3, the above configuration can significantly curve the cutting edge side of the lateral blade portion 3 to the top portion Q in the curved shape of the lateral blade portion 3 with the cutting angles β and β' being ensured. Therefore, in a tilling operation in a case of the tilling pitch becoming large (for example, when the speed at which the tiller travels in a traveling direction becomes high without changing the rotational frequency of the rotary tine shaft (4 to 6 km per hour)), an outside surface (a surface at a back side of the paper surface in Figure 1) of the lateral blade portion 3 of the tillage tine can be prevented from contacting a plow sole surface after soil cutting during the tilling operation. Further, even if abrasion of the outside surface (the surface at the back side of the paper surface in Figure 1) of the lateral blade portion 3 advances, the outside surface of the lateral blade portion 3 can be prevented from contacting the plow sole surface. Thereby, tilling vibration that occurs when the outside surface of the lateral blade portion 3 of the tillage tine contacts the plow sole surface after soil cutting can be prevented, deep tillage performance is improved, and lift of the tiller during a tilling operation can be prevented. Even when the tilling pitch becomes large, the tillage performance such as a throwing force, reversibility, plowing-in performance, soil crushing performance, and land leveling performance can be sufficiently exhibited. Further, the configuration can be partially omitted, and a configuration partially extracted can be adopted, as a matter of course.

## Claims

1. A tillage tine, comprising:
a mounting base portion (1) that is fitted to a mounting flange (S0) of a rotary tine shaft (S);
a vertical blade portion (2) that is formed from a planar plate that extends continuously in a lateral direction from the mounting base portion (1) in side view to a lateral blade curve start portion (G) when a surface having a rotation axis of the rotary tine shaft (S) as a normal line is set as a side surface, and includes a cutting edge that is formed at a lower side via a step from a lower edge of the mounting base portion (1); and
a lateral blade portion (3) that extends continuously from the vertical blade portion (2) with the lateral blade curve start portion (G) as a boundary, is formed by including a width dimension not less than a width dimension of the mounting base portion (1) from the vertical blade portion (2) to a distal end side, is formed by gradually curving to an upper side in side view, and is formed from a curved plate that is curved to one side with the lateral blade curve start portion (G) as the boundary.

2. The tillage tine according to claim 1,
wherein the lateral blade portion (3) is curved at a substantially right angle in sectional view orthogonal to the lateral blade curve start portion (G).

3. The tillage tine according to claim 2,
wherein the lateral blade curve start portion (G) comprises a circular arc with a bending radius (R) with a bending center (R0) that is provided at an upper side or a lower side from a substantially central portion position of a mounting base portion width (D) in the mounting base portion (1), as a center.

4. The tillage tine according to any one of claims 1 to 3,
wherein a wall thickness of a distal end in the lateral blade portion (3) is formed to be substantially equivalent to, or thinner than a wall thickness of the mounting base portion (1).

## Patentansprüche

1. Bodenbearbeitungszinke, umfassend:
einen Montagebasisabschnitt (1), der an einem Montageflansch (S0) einer Drehzinkwelle (S) angebracht ist;
einen vertikalen Klingenabschnitt (2), der aus einer ebenen Platte gebildet ist, die sich in einer Seitenansicht kontinuierlich in eine laterale Richtung vom Montagebasisabschnitt (1) zu einem lateralen Klingenkrümmungsanfangsabschnitt (G) erstreckt, wenn eine Oberfläche, die eine Rotationsachse der Drehzinkwelle (S) als eine Normallinie aufweist, als eine Seitenoberfläche eingestellt ist, und eine Schneidekante umfasst, die an einer unteren Seite über eine Stufe von einer unteren Kante des Montagebasisabschnitts (1) ausgebildet ist; und
wobei ein lateraler Klingenabschnitt (3), der sich kontinuierlich vom vertikalen Klingenabschnitt (2) erstreckt, worin der laterale Klingenkrümmungsanfangsabschnitt (G) eine Begrenzung darstellt, durch Umfassen einer Breitendimension ausgebildet ist, die nicht kleiner als eine Breitendimension des Montagebasisabschnitts (1) vom vertikalen Klingenabschnitt (2) zu einer distalen Endseite ist, in einer Seitenansicht durch ein allmähliches Sich-Krümmen zu einer oberen Seite hin ausgebildet ist, und aus einer gekrümmten Platte gebildet ist, die zu einer Seite hin gekrümmt ist, worin der laterale Klingenkrümmungsanfangsabschnitt (G) die Begrenzung darstellt.

2. Bodenbearbeitungszinke gemäß Anspruch 1,
worin der laterale Klingenabschnitt (3) in einer Querschnittsansicht in einem im Wesentlichen rechten Winkel orthogonal zum lateralen Klingenkrümmungsanfangsabschnitt (G) gekrümmt ist.

3. Bodenbearbeitungszinke gemäß Anspruch 2,
worin der laterale Klingenkrümmungsanfangsabschnitt (G) einen kreisförmigen Bogen mit einem Biegeradius (R) mit einem Biegemittelpunkt (R0) als einen Mittelpunkt umfasst, der an einer oberen Seite oder einer unteren Seite von einer im Wesentlichen Mittelabschnittsposition einer Montagebasisabschnittsbreite (D) im Montagebasisabschnitt (1) vorgesehen ist.

4. Bodenbearbeitungszinke gemäß einem der Ansprüche 1 bis 3,
worin eine Wanddicke eines distalen Endes im lateralen Klingenabschnitt (3) derart ausgebildet ist, dass sie zu einer Wanddicke des Montagebasisabschnitts (1) im Wesentlichen äquivalent oder dünner als diese ist.

## Revendications

1. Dent de travail du sol, comprenant :
une partie de base de montage (1) qui est raccordée à une bride de montage (S0) d'un arbre de dent rotatif (S) ;
une partie de lame verticale (2) qui est formée à partir d'une plaque plane qui s'étend de façon continue dans une direction latérale à partir de la partie de base de montage (1) en vue latérale jusqu'à une partie de début de courbe de lame latérale (G) lorsqu'une surface ayant un axe de rotation de l'arbre de dent rotatif (S) en tant que ligne normale est établie comme une surface latérale, et comprend un bord coupant qui est formé au niveau d'un côté inférieur via un gradin à partir d'un bord inférieur de la partie de base de montage (1) ; et
une partie de lame latérale (3) qui s'étend de façon continue à partir de la partie de lame verticale (2) avec la partie de début de courbe de lame latérale (G) en tant que limite, est formée en incluant une dimension de largeur qui n'est pas inférieure à une dimension de largeur de la partie de base de montage (1) à partir de la partie de lame verticale (2) jusqu'à un côté d'extrémité distale, est formée en s'incurvant progressivement vers un côté supérieur en vue latérale, et est formée à partir d'une plaque incurvée qui est incurvée vers un côté avec la partie de début de courbe de lame latérale (G) en tant que limite.

2. Dent de travail du sol selon la revendication 1,
dans laquelle la partie de lame latérale (3) est incurvée sensiblement à angle droit en vue en coupe orthogonale à la partie de début de courbe de lame latérale (G).

3. Dent de travail du sol selon la revendication 2,
dans laquelle la partie de début de courbe de lame latérale (G) comprenant un arc circulaire ayant un rayon de courbure (R) avec un centre de courbure (R0) qui est fourni au niveau d'un côté supérieur ou d'un côté inférieur à partir d'une position de partie sensiblement centrale d'une largeur de partie de base de montage (D) dans la partie de base de montage (1), en tant que centre.

4. Dent de travail du sol selon l'une quelconque des revendications 1 à 3,
dans laquelle une épaisseur de paroi d'une extrémité distale dans la partie de lame latérale (3) est formée pour être sensiblement équivalente à ou plus mince qu'une épaisseur de paroi de la partie de base de montage (1).
